# EUROPEAN PATENT APPLICATION

(11) **EP 4 844 513 A1**
(43) Date of publication of application: **25.11.2026**
(21) Application number: 24934976.2
(22) Date of filing: 25.12.2024
(51) Int. Cl.: G05B 23/02

(54) **QUALITY CHANGE FACTOR IDENTIFICATION METHOD, QUALITY CHANGE FACTOR IDENTIFICATION DEVICE, QUALITY CHANGE FACTOR IDENTIFICATION DEVICE SYSTEM, AND METAL MATERIAL MANUFACTURING METHOD**

(30) Priority: 10.04.2024 JP 2024063549
(71) Applicant: JFE Steel Corporation, Tokyo 100-0011 (JP)
(72) Inventor: NAKANO Shota, Tokyo 100-0011 (JP); HIRATA Takehide, Tokyo 100-0011 (JP); SUZUKI Katsuya, Tokyo 100-0011 (JP)
(74) Representative: Hoffmann Eitle
(86) International application number: PCT/JP2024/046031
(87) International publication number: WO 2025/215891

(57) **Abstract**

A quality variation factor identification method to be executed by a computer includes a quality prediction step of predicting quality and outputting the quality as a predicted quality value, a quality prediction error calculation step of calculating a difference between an actual quality value and the predicted quality value as a quality prediction error, a variable selection step of selecting, based on a first variable importance, manufacturing conditions having a high contribution to the quality prediction error from among manufacturing conditions of each group into which manufacturing conditions of a plurality of manufacturing processes are grouped, and a factor identification step of identifying based on a second variable importance, a manufacturing condition having a high contribution to the quality prediction error from among the selected manufacturing conditions as a factor causing quality variation of a product.

## Description

### TECHNICAL FIELD

The present disclosure relates to a quality variation factor identification method, a quality variation factor identification apparatus, a quality variation factor identification apparatus system, and a method of manufacturing a metal material.

### BACKGROUND

In manufacturing processes such as steel production, a single product typically passes through many production lines. Product quality may vary as a result of daily improvement activities on each production line, operational changes, or aging-related changes in equipment. For example, a combination of changes in manufacturing conditions to improve yield rate and changes in equipment status (for example, cleaning performed using different equipment) may result in changes in product quality (quality anomalies).

For example, Patent Literature (PTL) 1 discloses a method that can suggest possible causes when a quality anomaly occurs. In the method described in PTL 1, a quality prediction model taking a plurality of manufacturing conditions as input variables and product quality as the output variable is used. The difference between a predicted quality value and an evaluated quality value is calculated as a quality prediction error, the quality contribution of each manufacturing condition is calculated, and the manufacturing condition that is the cause of the error is presented.

### CITATION LIST

### Patent Literature

PTL 1: JP 7251687 B2

### SUMMARY

### (Technical Problem)

In the case of the product being steel, for example, the product is manufactured through a plurality of manufacturing processes such as steelmaking, hot rolling, pickling, cold rolling, annealing, and plating. Therefore, the number of manufacturing conditions that could affect product quality can reach several hundred. It is possible to construct a quality prediction model using machine learning or statistical models (such as various regression models) with hundreds of manufacturing conditions as explanatory variables (input variables) and product quality as the objective variable (output variable). However, the quality prediction model may have too many degrees of freedom and become prone to the problem of overfitting (also referred to as excessive fitting or overtraining), in which the model fits the training data too faithfully.

The method described in PTL 1 can present possible causes when quality anomalies occur but does not address the problem of overfitting. When prediction is made using quality prediction models that do not address the problem of overfitting, it is difficult to correctly identify manufacturing conditions that are possible causes of quality anomalies. For example, noise or variability in the performance data for training can lead to overfitting of manufacturing conditions whose values change within a specific period, resulting in manufacturing conditions that are not actually correlated with quality being ranked highly in terms of importance (quality contribution). Furthermore, manufacturing conditions that actually correlate with quality may be ranked lower in importance.

In view of the above circumstances, an object of the present disclosure is to provide a quality variation factor identification method, a quality variation factor identification apparatus, a quality variation factor identification apparatus system, and a method of manufacturing a metal material that can accurately identify factors of quality variation in a product manufactured through a plurality of manufacturing processes.

### (Solution to Problem)

(1) A quality variation factor identification method according to an embodiment of the present disclosure is
   a quality variation factor identification method for causing a computer to identify factors causing quality variation of a product manufactured through a plurality of manufacturing processes, the method including:
   a quality prediction step of causing the computer to execute processing to input manufacturing conditions of the plurality of manufacturing processes into a quality prediction model that takes the manufacturing conditions as input variables and quality as an output variable, and to predict the quality as a predicted quality value;
   a quality prediction error calculation step of causing the computer to execute processing to calculate a difference between an actual quality value of an actual product manufactured by the plurality of manufacturing processes and the predicted quality value as a quality prediction error;
   a variable selection step of causing the computer to execute processing to group the manufacturing conditions of the plurality of manufacturing processes into a plurality of groups, calculate a first variable importance of the manufacturing conditions of each group using a plurality of first prediction error analysis models, each generated by taking the manufacturing conditions of a corresponding group as input variables and the quality prediction error as an output variable, and select manufacturing conditions having a high contribution to the quality prediction error from among the manufacturing conditions of each group, based on the first variable importance; and
   a factor identification step of causing the computer to execute processing to calculate a second variable importance of the selected manufacturing conditions using a second prediction error analysis model generated taking only the selected manufacturing conditions as input variables and the quality prediction error as an output variable, and to identify, based on the second variable importance, from among the selected manufacturing conditions, a manufacturing condition having a high contribution to the quality prediction error as a factor causing quality variation of the product.
(2) As an embodiment of the present disclosure, in (1),
   in the variable selection step, the manufacturing conditions of the plurality of manufacturing processes are grouped by identical manufacturing processes.
(3) As an embodiment of the present disclosure, in (1),
   in the variable selection step, the manufacturing conditions of the plurality of manufacturing processes are grouped by classifying physical phenomena that affect the quality and grouping the manufacturing conditions according to the physical phenomena affected by the manufacturing conditions.
(4) A quality variation factor identification apparatus according to an embodiment of the present disclosure is
   a quality variation factor identification apparatus for identifying factors causing quality variation of a product manufactured through a plurality of manufacturing processes, the apparatus including:
   a quality prediction unit configured to input manufacturing conditions of the plurality of manufacturing processes into a quality prediction model that takes the manufacturing conditions as input variables and quality as an output variable, predict the quality as a predicted quality value, and calculate a difference between an actual quality value of an actual product manufactured by the plurality of manufacturing processes and the predicted quality value as a quality prediction error;
   a variable selection unit configured to group the manufacturing conditions of the plurality of manufacturing processes into a plurality of groups, calculate a first variable importance of the manufacturing conditions of each group using a plurality of first prediction error analysis models, each generated by taking the manufacturing conditions of a corresponding group as input variables and the quality prediction error as an output variable, and select manufacturing conditions having a high contribution to the quality prediction error from among the manufacturing conditions of each group, based on the first variable importance; and
   a factor identification unit configured to calculate a second variable importance of the selected manufacturing conditions using a second prediction error analysis model generated taking the selected manufacturing conditions as input variables and the quality prediction error as an output variable, and to identify, based on the second variable importance, from among the selected manufacturing conditions, a manufacturing condition having a high contribution to the quality prediction error as a factor causing quality variation of the product.
(5) As an embodiment of the present disclosure, in (4), the quality variation factor identification apparatus further includes
   a first output unit configured to output, as an output signal, information including a specific manufacturing condition identified by the factor identification unit as a factor causing quality variation.
(6) As an embodiment of the present disclosure, in (4) or (5), the quality variation factor identification apparatus further includes
   a quality prediction model regeneration unit configured to regenerate and update a quality prediction model by adding, to the input variables, a specific manufacturing condition identified by the factor identification unit as a factor causing quality variation; and
   a specific manufacturing condition control range determination unit configured to determine a control range of the specific manufacturing condition using the updated quality prediction model.
(7) As an embodiment of the present disclosure, in (6), the quality variation factor identification apparatus further includes
   a second output unit configured to output the control range of the specific manufacturing condition, determined by the specific manufacturing condition control range determination unit, as an output signal.
(8) A quality variation factor identification apparatus system according to an embodiment of the present disclosure is
   a quality variation factor identification apparatus system for identifying factors causing quality variation of a product manufactured through a plurality of manufacturing processes, the system including the quality variation factor identification apparatus of (4) or (6), a performance data acquisition apparatus, and an information output apparatus, wherein
   the performance data acquisition apparatus is configured to acquire data including manufacturing conditions of the plurality of manufacturing processes and actual quality values,
   the quality variation factor identification apparatus is configured to use the data to identify information regarding a specific manufacturing condition that is a factor causing quality variation of a product, and
   the information output apparatus is configured to output the information regarding the specific manufacturing condition as an output signal.
(9) A method of manufacturing a metal material according to an embodiment of the present disclosure includes:
   predicting quality of a product using a quality prediction model that includes, among input variables, a specific manufacturing condition identified by the quality variation factor identification method of any one of (1) to (3) and takes the quality as an output variable;
   determining manufacturing conditions identified as factors of product quality so that the predicted quality of the product falls within a preset range; and
   manufacturing a steel product according to the determined manufacturing conditions.

### (Advantageous Effect)

According to the present disclosure, a quality variation factor identification method, a quality variation factor identification apparatus, a quality variation factor identification apparatus system, and a method of manufacturing a metal material that can accurately identify factors of quality variation in a product manufactured through a plurality of manufacturing processes can be provided.

### BRIEF DESCRIPTION OF THE DRAWINGS

In the accompanying drawings:
FIG. 1 is a block diagram illustrating a configuration of a quality variation factor identification apparatus according to an embodiment of the present disclosure;
FIG. 2 is a flowchart illustrating the processing flow in a quality variation factor identification method according to an embodiment of the present disclosure;
FIG. 3 is a diagram illustrating procedures for an example;
FIG. 4 is a diagram illustrating the relationship between the predicted quality value and the actual quality value in the quality prediction model of the example;
FIG. 5 is a diagram illustrating the relationship between the predicted quality value and the actual quality value in the quality prediction model of the example;
FIG. 6 is a diagram illustrating, for each group, a graph in which the variable importance of manufacturing conditions used as input variables is calculated and arranged in descending order;
FIG. 7A is a diagram illustrating prediction error analysis in the example;
FIG. 7B is a diagram illustrating prediction error analysis in a comparative example;
FIG. 8A is a diagram illustrating an outline of a conventional quality variation factor identification method;
FIG. 8B is a diagram illustrating an outline of a conventional quality variation factor identification method;
FIG. 8C is a diagram illustrating an outline of a conventional quality variation factor identification method;
FIG. 8D is a diagram illustrating an outline of a conventional quality variation factor identification method;
FIG. 9A is a diagram illustrating an outline of a quality variation factor identification method according to the present embodiment;
FIG. 9B is a diagram illustrating an outline of the quality variation factor identification method according to the present embodiment; and
FIG. 10 is a diagram illustrating a schematic configuration of a quality variation factor identification apparatus system according to the present embodiment.

### DETAILED DESCRIPTION

A quality variation factor identification method, a quality variation factor identification apparatus, a quality variation factor identification apparatus system, and a method of manufacturing a metal material according to an embodiment of the present disclosure are described below with reference to the drawings. First, an overview of a conventional quality variation factor identification method and an overview of the quality variation factor identification method according to the present embodiment will be explained.

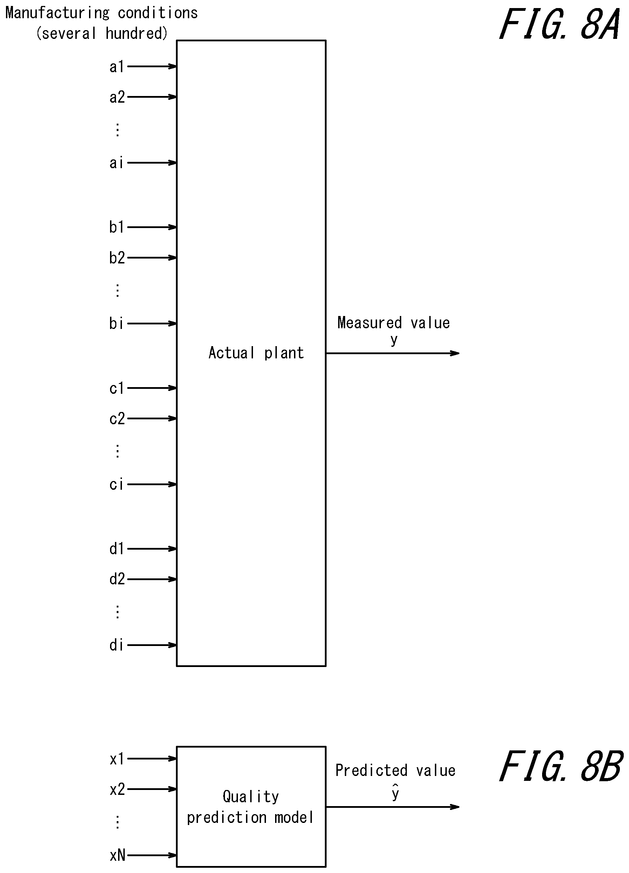

FIGS. 8A to 8D are diagrams illustrating an outline of a conventional quality variation factor identification method. As illustrated in FIG. 8A, for example, in the case of the product being steel, the product is produced by an actual manufacturing process (actual plant) through many manufacturing processes. Therefore, the total number of manufacturing conditions (a1, a2, ... ai, b1, b2, ... bi, c1, c2... ci, d1, d2... di) that could potentially affect a single aspect of quality of the product (measured value y) could number in the hundreds.

As illustrated in FIG. 8B, out of all of the manufacturing conditions (a1, a2, ... ai, b1, b2, ... bi, c1, c2, ... ci, d1, d2, ... di), the quality prediction model uses N manufacturing conditions (x1, x2, ... xN) that have a high influence on the quality being predicted. The quality prediction model selects N manufacturing conditions with high metallurgical influence, for example, to be explanatory variables (input variables) and outputs a predicted value y^ of the target quality. In the following, the predicted value of quality may be referred to as the "predicted quality value". Furthermore, the measured value of quality is sometimes referred to as the "measured quality value".

For example, the method described in PTL 1 calculates the quality contribution of N manufacturing conditions (x1, x2, ... xN) input into the quality prediction model when the magnitude of the quality prediction error (y^ - y), which is the difference between the actual quality value and the predicted quality value, becomes large. Then, from among the N manufacturing conditions, the cause of the product quality anomaly is identified.

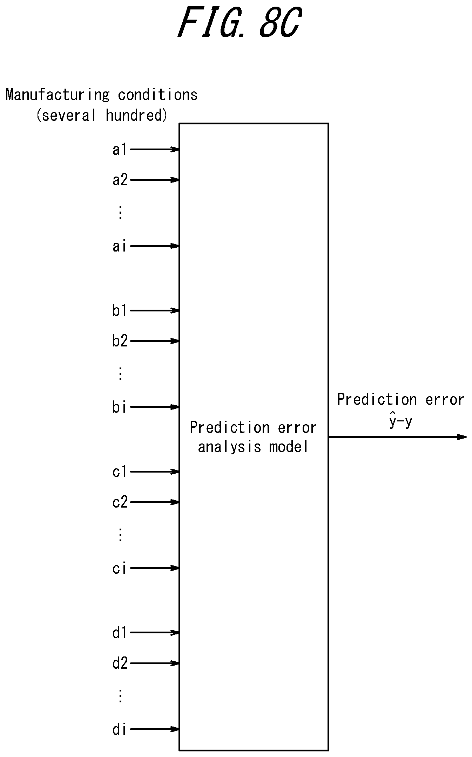

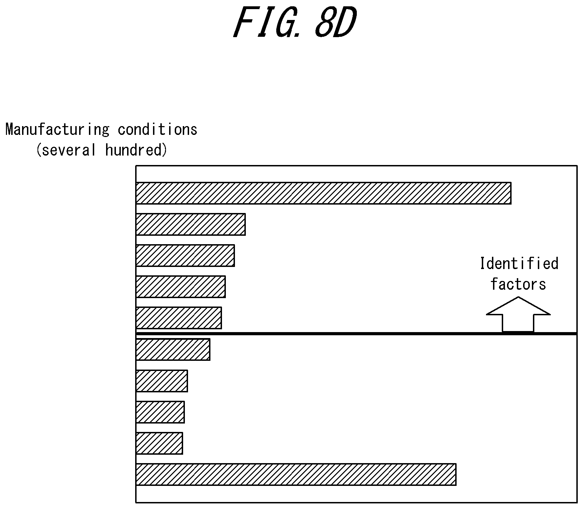

When attempting to identify the cause of a product quality anomaly from among all manufacturing conditions, including N manufacturing conditions, using the method described in PTL 1, a prediction error analysis model is generated as illustrated in FIG. 8C. In other words, a prediction error analysis model is generated in which all manufacturing conditions (a1, a2, ... ai, b1, b2, ... bi, c1, c2... ci, d1, d2... di) are used as input variables, and the quality prediction error (y^ - y) is used as the output variable. If the total number of manufacturing conditions reaches several hundred, then as illustrated in FIG. 8D, even if variable importance (feature importance) is calculated based on the generated prediction error analysis model, the large number of explanatory variables can lead to a high degree of freedom in the model and the problem of overfitting (over-learning). Therefore, it is difficult to identify the manufacturing conditions that are the true cause of quality variation. Here, an increase in the quality prediction error is simply described below as being an increase in quality prediction error. In other words, a "large quality prediction error" simply means that the absolute value of the quality prediction error is large, unless otherwise specified. Furthermore, quality variation includes quality anomalies, but is not limited thereto, and includes variations of a target quality that differ from normal conditions. Specific examples of variable importance will be described later.

We conceived of analyzing quality prediction errors in two processes (steps) to eliminate the problem of overfitting in prediction error analysis models and identify the manufacturing conditions that are the true cause of quality variation. First, all of the manufacturing conditions are narrowed down in the first process to those that have a high contribution to quality prediction errors. The quality prediction error for the narrowed-down manufacturing conditions is analyzed in the second process. These two processes make it possible to eliminate the problem of overfitting and identify the manufacturing conditions that are the true cause of quality variation.

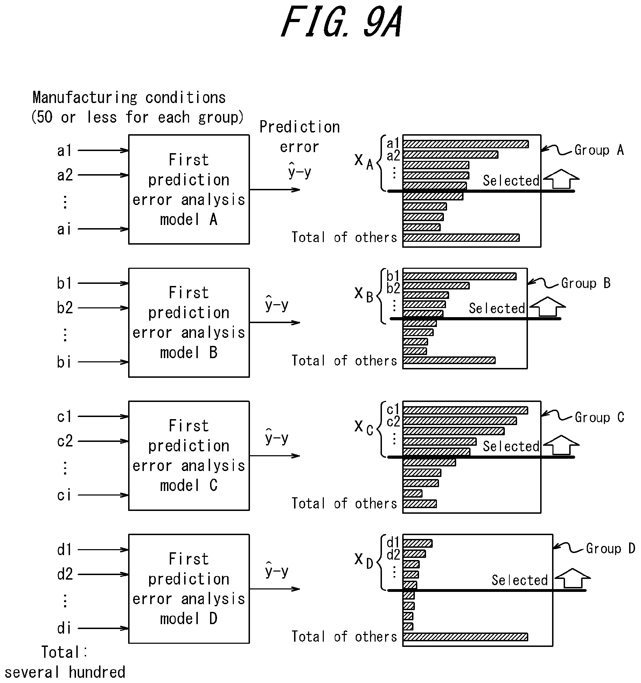

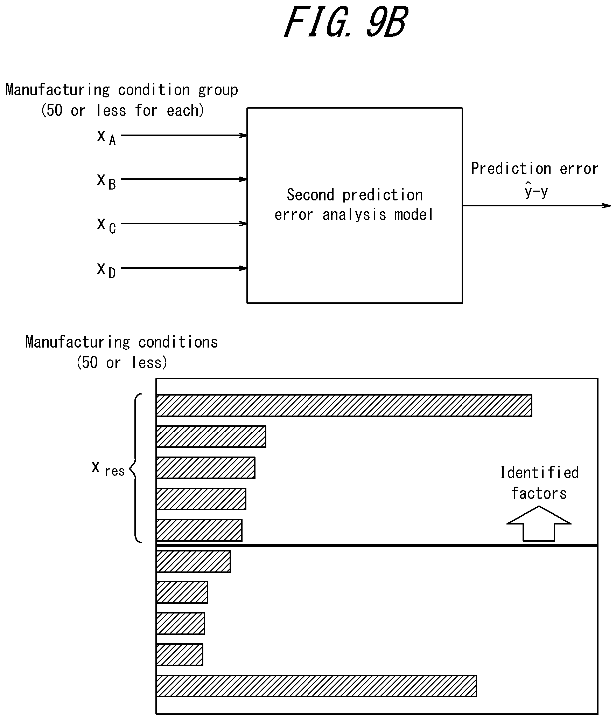

FIGS 9A and 9B are diagrams illustrating an outline of the quality variation factor identification method according to the present embodiment. As illustrated in FIG. 9A, in the first step, the manufacturing conditions of a plurality of manufacturing processes (a1, a2, ... ai, b1, b2, ... bi, c1, c2... ci, d1, d2... di) are divided into a plurality of groups. In the example illustrated in FIG. 9A, the number of groups is four, but the number of groups is not limited to a specific number. For each group, a prediction error analysis model is generated, with manufacturing conditions as the input variable and the quality prediction error (y^ - y) as the output variable. In other words, a plurality of prediction error analysis models is generated. In the example illustrated in FIG. 9A, a first prediction error analysis model A, a first prediction error analysis model B, a first prediction error analysis model C, and a first prediction error analysis model D (hereinafter referred to as "first prediction error analysis models A, B, C, and D") are generated. The variable importance of the manufacturing conditions (first variable importance) is then calculated for each group using the first prediction error analysis models A, B, C, and D. Manufacturing conditions that have a high contribution to the quality prediction error (y^ - y) are selected from among the manufacturing conditions of each group (in the example of FIG. 9A, the manufacturing condition groups x_{A}, x_{B}, x_{C}, x_{D}), based on the first variable importance.

A prediction error analysis model (second prediction error analysis model) that takes the selected manufacturing conditions (x_{A}, x_{B}, x_{C}, x_{D}) as input variables and the quality prediction error (y^ - y) as the output variable is generated, as illustrated in FIG. 9B. The variable importance (second variable importance) of the selected manufacturing conditions (x_{A}, x_{B}, x_{C}, x_{D}) is then calculated using the second prediction error analysis model. Furthermore, based on the second variable importance, manufacturing conditions that have a high contribution to the quality prediction error (y^ - y) (xᵣₑₛ in the example of FIG. 9B) are identified as manufacturing conditions that are factors causing quality variation of the product. Details on a quality variation factor identification apparatus, a quality variation factor identification method, a quality variation factor identification apparatus system, and a method of manufacturing a metal material according to the present embodiment are described below.

### <Quality variation factor identification apparatus>

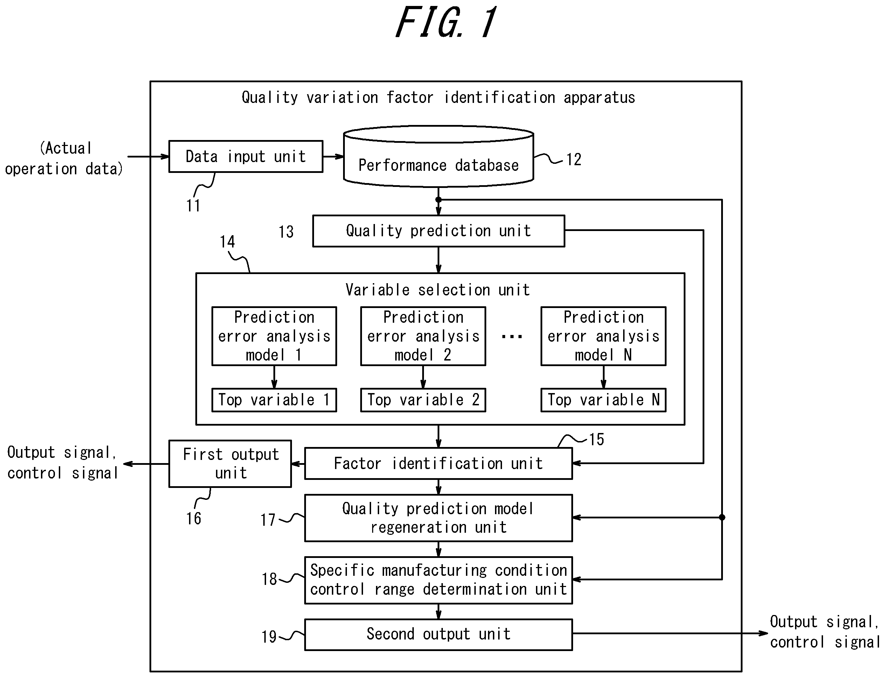

FIG. 1 is a block diagram illustrating a configuration of a quality variation factor identification apparatus according to an embodiment of the present disclosure. The quality variation factor identification apparatus identifies factors causing quality variation of a product manufactured through a plurality of manufacturing processes. The quality variation factor identification apparatus diagnoses processes that cause quality variation in a manufacturing process, such as steel production. In the present embodiment, the product is described as being steel. As illustrated in FIG. 1, the quality variation factor identification apparatus includes a data input unit 11, a performance database 12, a quality prediction unit 13, a variable selection unit 14, a factor identification unit 15, and a first output unit 16 as the main components. The quality variation factor identification apparatus may further include a quality prediction model regeneration unit 17, a specific manufacturing condition control range determination unit 18, and a second output unit 19, as in the present embodiment. In the present embodiment, the quality variation factor identification apparatus performs a quality variation factor identification method and is used in a method of manufacturing a metal material. Here, the arrows in FIG. 1 schematically indicate processes executed by components of the quality variation factor identification apparatus or the flow of data.

### (Data input unit)

The data input unit 11 acquires, as actual operation data, the manufacturing conditions of a plurality of processes (plurality of manufacturing processes) for manufacturing the product targeted for quality variation factor identification. The actual operation data includes actual quality values. In the present embodiment, the data input unit 11 receives data via a network. The data input unit 11 stores (accumulates) the received actual operation data in the performance database 12. The performance database 12 is preferably configured to store large amounts of data over a long period of time. The performance database 12 may be stored in a storage provided in (or accessible by) the quality variation factor identification apparatus. The storage is, for example, one or more memories. The memories can be any memory, including but not limited to a semiconductor memory, a magnetic memory, or an optical memory.

### (Quality prediction unit)

The quality prediction unit 13 generates a quality prediction model that predicts quality using past actual operation data (manufacturing conditions and actual quality values) retrieved from the performance database 12. The quality prediction model takes manufacturing conditions for a plurality of manufacturing processes as input variables and quality as the output variable. The quality prediction model may be generated using machine learning that includes statistical methods such as partial least squares (PLS) regression or random forest.

The quality prediction unit 13 uses the generated quality prediction model to predict the quality of the target product for which the factors causing quality variation have been identified. The target product may be, for example, the latest product (a product currently in production). In other words, the quality prediction unit 13 inputs the manufacturing conditions of a plurality of manufacturing processes into a quality prediction model taking the manufacturing conditions as input variables and quality as the output variable and predicts the quality as a predicted quality value.

Furthermore, in the present embodiment, the quality prediction unit 13 calculates the difference between an actual quality value of an actual product manufactured by the plurality of manufacturing processes and the predicted quality value as a quality prediction error. The calculated quality prediction error may be output to the variable selection unit 14, the factor identification unit 15, and the first output unit 16. Furthermore, the calculated quality prediction error may be output only in a case in which the quality prediction error exceeds a predetermined range.

### (Variable selection unit)

The variable selection unit 14 groups the manufacturing conditions of the plurality of manufacturing processes into a plurality of groups and generates a plurality of first prediction error analysis models generated taking the manufacturing conditions of each group as input variables and the quality prediction error as an output variable. Furthermore, the variable selection unit 14 uses the first prediction error analysis models to calculate a first variable importance of the manufacturing conditions of each group and selects manufacturing conditions having a high contribution to the quality prediction error from among the manufacturing conditions of each group, based on the first variable importance.

In the present embodiment, the variable selection unit 14 generates a plurality of (N) models (first prediction error analysis models) that analyze the quality prediction error calculated by the quality prediction unit 13.

As described above, each first prediction error analysis model takes manufacturing conditions as input variables and the quality prediction error as the output variable. The manufacturing conditions used as input variables for a single first prediction error analysis model are selected not from all of the manufacturing conditions of the plurality of manufacturing processes, but so that the number of the manufacturing conditions is equal to or less than a number that can avoid the problem of overfitting. Here, there may be overlap between the manufacturing conditions used as input variables for a plurality of models, as long as the number of manufacturing conditions is equal to or less than the number that can avoid the problem of overfitting for each model. However, in the present embodiment, each of the N first prediction error analysis models is described as having different input variables.

Here, the number of input variables of the first prediction error analysis model varies depending on the product, for example, but it is preferable to select 50 or less input variables to avoid overfitting.

The first prediction error analysis model has a large number of input variables. Therefore, the first prediction error analysis model is preferably generated by principal component regression (PCR), partial least squares (PLS) regression, or the like in the case of a linear model, taking multicollinearity into consideration. Furthermore, in the case of a nonlinear model, the first prediction error analysis model is preferably generated by machine learning using tree-based models (decision trees) such as random forests or gradient boosting (LightGBM). The number of data points (manufacturing conditions and quality prediction errors) used to generate the first prediction error analysis model is preferably at least approximately 80 times the number of input variables.

The grouping of manufacturing conditions may be performed based on the product, characteristics of the quality, features of the manufacturing line, or the like. Here, the manufacturing conditions are preferably grouped by identical manufacturing processes. In other words, the variable selection unit 14 preferably groups the manufacturing conditions of the plurality of manufacturing processes by identical manufacturing processes. As a result of classifying the model by manufacturing process, the influence of each process can be extracted, and the manufacturing conditions that have a high influence (contribution) on product quality in each manufacturing process can be identified clearly. Since equipment and corresponding manufacturing conditions that are important for quality control can be clarified for each manufacturing process, an improvement in quality control standards can be expected. In particular, grouping by manufacturing process is preferable when the equipment itself in the manufacturing process has changed due to factors such as repair work.

As another example, the variable selection unit 14 may classify factors (physical phenomena) that affect quality and group the manufacturing conditions of the plurality of manufacturing processes by manufacturing conditions that affect these factors (physical phenomena). This type of grouping can also be expected to improve quality control standards.

To illustrate with an example in which the quality of a metal material is its tensile strength, the strengthening mechanisms (an example of a physical phenomenon) of metal materials can be classified into solid solution strengthening, precipitation strengthening, microstructure strengthening (dislocation strengthening), refinement of crystal grains, and the like. Then, grouping is performed by manufacturing conditions that affect the strengthening mechanism (physical phenomenon) of the metal material. For example, the manufacturing conditions can be grouped into a group of variables (manufacturing conditions) related to solid solution strengthening, a group of variables (manufacturing conditions) related to precipitation strengthening, and a group of variables (manufacturing conditions) related to microstructure strengthening.

Furthermore, if the product is steel, the elemental composition values have a significant impact on quality. Elemental composition values can be grouped separately from other manufacturing conditions.

When it is clear that the manufacturing conditions have been changed during the period in which the data (manufacturing conditions and quality prediction error) for generating the first prediction error analysis model was measured, the changed manufacturing conditions are preferably placed together into a single group.

The variable selection unit 14 uses a plurality of (N) first prediction error analysis models to calculate the variable importance (first variable importance) for the quality prediction error of the manufacturing conditions for each group. Based on the first variable importance, manufacturing conditions that have a high contribution to the quality prediction error are selected from among the manufacturing conditions for each group.

The variable selection unit 14 may calculate the first variable importance using the principal component scores of the first principal component in a case in which the first prediction error analysis model is generated using PCR or PLS regression.

Furthermore, in the case of generating the first prediction error analysis model by machine learning, the variable selection unit 14 may calculate the first variable importance using SHAP (SHapley Additive exPlanations) values or Permutation Importance. Permutation Importance is a technique for quantifying the importance of features in a machine learning model.

The variable selection unit 14 sorts the manufacturing conditions in order from higher to lower first variable importance and selects, for each group, a predetermined number of top-ranked variables as variables that have a high contribution to the quality prediction error. In the present embodiment, the variables are manufacturing conditions. Furthermore, in the present embodiment, the predetermined number is designated as M. Therefore, the variable selection unit 14 selects M manufacturing conditions that have a high contribution to the quality prediction error for each of the plurality of (N) first prediction error analysis models and thus selects a total of N × M variables (manufacturing conditions).

The N × M manufacturing conditions selected by the variable selection unit 14 are used as input variables for the model (second prediction error analysis model) in the factor identification unit 15. Therefore, to avoid overfitting of the second prediction error analysis model, the number of N × M manufacturing conditions is preferably 50 or less.

The variable selection unit 14 may set a threshold for variable importance and select variables (manufacturing conditions) that correspond to a variable importance equal to or greater than the set threshold. The threshold for variable importance may be predetermined according to the manufacturing process and the quality to be predicted.

### (Factor identification unit)

The factor identification unit 15 uses the N × M manufacturing conditions selected by the variable selection unit 14 as input variables and the quality prediction error calculated by the quality prediction unit 13 as the output variable to generate a second prediction error analysis model. The factor identification unit 15 uses the generated second prediction error analysis model to calculate a second variable importance of the selected N × M manufacturing conditions. The factor identification unit 15 then identifies the manufacturing conditions having a high contribution to the quality prediction error among the selected manufacturing conditions, based on the second variable importance, as factors causing quality variation of the product.

As described above, the number of input variables (N × M) in the second prediction error analysis model is set to 50 or less. Therefore, overfitting can be avoided, and important factors that are factors causing quality variation can be identified from the manufacturing conditions selected in the variable selection unit 14. In addition to the important factors, indirect factors that vary the correlation with quality can also be identified.

### (First output unit)

The first output unit 16 outputs, as an output signal, information including manufacturing conditions identified by the factor identification unit 15 as factors causing quality variation of the product. The output signal may include the quality prediction error calculated by the quality prediction unit 13. Furthermore, the first output unit 16 may output an output signal when the quality prediction error calculated by the quality prediction unit 13 exceeds a range between an upper control limit and a lower control limit and is determined to indicate occurrence of a quality anomaly. When the output destination of the output signal is a control apparatus of equipment, the output signal may be a control signal for automatically stopping equipment to which the manufacturing condition identified by the factor identification unit 15 as a factor causing quality variation is applied. Furthermore, when the output destination of the output signal is the operation terminal of an operator, the output signal may be operator guidance information displayed on the screen as guidance.

### (Quality prediction model regeneration unit)

The quality prediction model regeneration unit 17 regenerates and updates the quality prediction model by adding, to the input variables of the quality prediction model generated by the quality prediction unit 13, a manufacturing condition identified by the factor identification unit 15 as a factor causing quality variation (hereinafter referred to as a "specific manufacturing condition"). The method of regenerating the quality prediction model is the same as the generation method used by the quality prediction unit 13.

### (Specific manufacturing condition control range determination unit)

The specific manufacturing condition control range determination unit 18 uses the updated quality prediction model to determine a control range of the specific manufacturing condition (in other words, the new target range for the specific manufacturing condition). The specific manufacturing condition control range determination unit 18 inputs the standard values of the specific manufacturing condition and other manufacturing conditions into the updated quality prediction model based on past actual operation data (manufacturing conditions and actual quality values) retrieved from the performance database 12 and predicts the quality as a predicted quality value. The specific manufacturing condition control range determination unit 18 then calculates the difference between the actual quality value and the predicted quality value as the quality prediction error. A control range, defined as a range of variation from a reference value of a specific manufacturing condition that results in the calculated quality prediction error falling within a range between an upper control limit and a lower control limit of the quality prediction error, can be determined using mathematical programming methods such as a branch-and-bound method.

### (Second output unit)

The second output unit 19 outputs the control range of the specific manufacturing condition, determined by the specific manufacturing condition control range determination unit 18, as an output signal.

When the output destination of the output signal is a control apparatus of equipment, the output signal may be a control signal for equipment for which the specific manufacturing condition is set.

Furthermore, when the output destination of the output signal is the operation terminal of an operator, the output signal may be operator guidance information displayed on the screen as guidance.

### <Quality variation factor identification method>

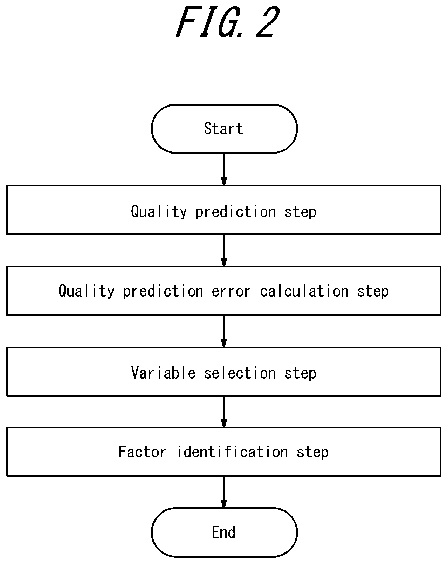

FIG. 2 is a flowchart illustrating the processing flow of the quality variation factor identification method executed by the quality variation factor identification apparatus according to the present embodiment. The quality variation factor identification method includes at least a quality prediction step, a quality prediction error calculation step, a variable selection step, and a factor identification step.

In the quality prediction step, the quality prediction unit 13 uses the generated quality prediction model to predict the quality of the target product for which the factors causing quality variation have been identified. Next, in the quality prediction error calculation step, the quality prediction unit 13 calculates the difference between the actual quality value of an actual product manufactured by the plurality of manufacturing processes and the predicted quality value as the quality prediction error.

Next, in the variable selection step, the variable selection unit 14 groups the manufacturing conditions of the plurality of manufacturing processes into a plurality of (N) groups and selects M manufacturing conditions that have a high contribution to the quality prediction error for each group, thereby selecting a total of M × N manufacturing conditions.

Next, in the factor identification step, the factor identification unit 15 identifies the manufacturing conditions that are the cause of the quality variation from the M × N manufacturing conditions (variables) selected in the variable selection step.

### <Method of manufacturing a metal material>

Using the above quality variation factor identification method, a method of manufacturing a metal material is performed to produce a metal material, including steel, as a product. In other words, the quality of a product is predicted using a quality prediction model that includes, among input variables, a specific manufacturing condition identified by the quality variation factor identification method and takes the quality as the output variable. Furthermore, the manufacturing condition identified as a factor of product quality is determined so that the predicted quality of the product falls within a preset range. A steel product is then manufactured according to the determined manufacturing conditions.

In the method of manufacturing a metal material, the quality prediction model is regenerated and updated in cases such as when the specific manufacturing condition is not included in the manufacturing conditions that are the explanatory variables of the quality prediction model. The quality prediction model is regenerated and updated by adding the specific manufacturing condition to the input variables (explanatory variables). Here, when the specific manufacturing condition is included as an explanatory variable in the quality prediction model, the quality prediction model may be regenerated without changing the explanatory variables, so as to minimize the quality prediction error.

Next, the control range for the specific manufacturing condition is determined so that the product quality predicted using the regenerated quality prediction model falls within a preset range. The control range for the specific manufacturing condition can be determined using mathematical programming methods such as a branch-and-bound method.

Next, the specific manufacturing condition is adjusted so as to fall within the determined control range, and the steel product is manufactured.

The effects of the present disclosure will be described in detail below based on examples, but the present disclosure is not limited to these examples.

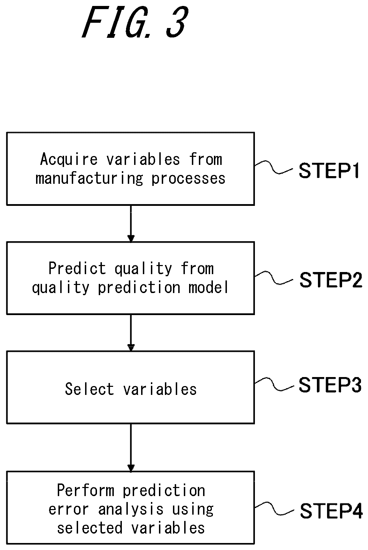

An example of the quality variation factor identification method according to the present embodiment is described below. In the present example, the factors causing quality variation in the tensile strength of a high formability high strength cold-rolled steel sheet, which is a type of cold-rolled thin steel sheet, were identified. FIG. 3 illustrates the procedure for the present example.

A cold-rolled thin steel sheet is manufactured through a steelmaking process, hot rolling processes, cold rolling processes, and annealing processes. In the steelmaking process, elemental composition values are representative operating conditions. In the hot rolling process, the material temperature is a representative operating condition. In the cold rolling process, the reduction amount is a representative operating condition. In the annealing process, the material temperature is a representative operating condition. In the present embodiment, manufacturing conditions (variables) that are candidates for quality variation factors were obtained from these manufacturing processes (STEP 1). There were approximately 200 different manufacturing conditions in total.

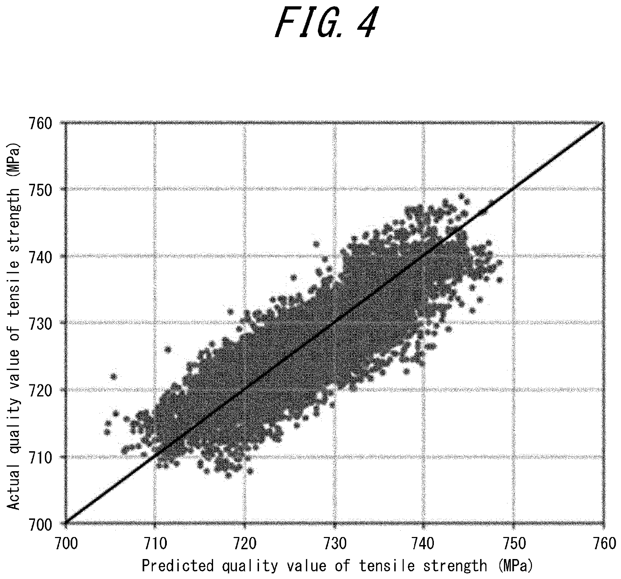

In the present example, a quality prediction model was generated to predict tensile strength for the same product (product with the same manufacturing standards or dimensions) based on three years of past data (48,000 samples) on manufacturing conditions and measured values of tensile strength. In the present example, the quality prediction model was generated using PLS regression. From approximately 200 types of operating conditions, 20 manufacturing conditions that were considered to have a particularly high correlation with tensile strength from a metallurgical perspective were used as input variables (explanatory variables). FIG. 4 illustrates the relationship between the predicted quality values in the generated quality prediction model and the measured values of tensile strength (actual quality values).

Data on manufacturing conditions and measured values of tensile strength (actual quality values) for the most recent six months (4,000 samples), which differed from the data used to generate the quality prediction model, were then input into the generated quality prediction model, and predicted values of tensile strength (predicted quality values) were calculated. Furthermore, the difference between the calculated predicted quality value and the actual quality value was calculated as the quality prediction error (STEP 2). STEP 2 corresponds to the quality prediction step and the quality prediction error calculation step.

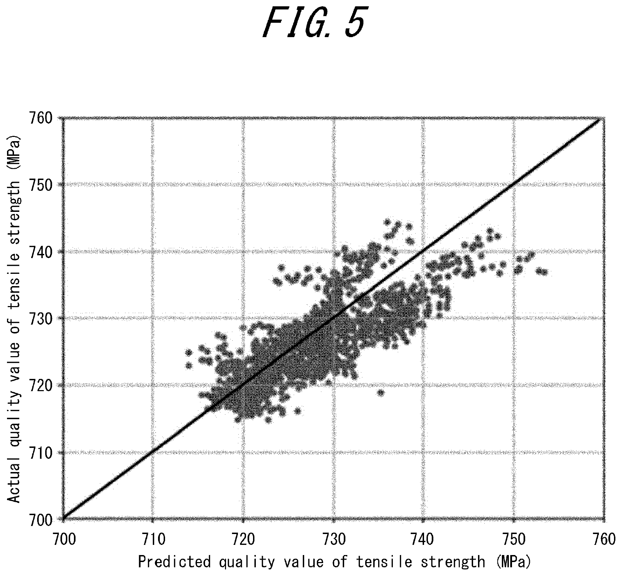

FIG. 5 illustrates the relationship between the predicted quality values in the quality prediction model in STEP 2 and the measured values of tensile strength (actual quality values). It can be seen in FIG. 5 that the quality prediction error is larger compared to FIG. 4 (the predicted quality value deviates significantly from the actual quality value), indicating that the quality characteristics have changed in the last six months.

Next, four prediction error analysis models (first prediction error analysis models) that predict the quality prediction error of tensile strength in STEP 2 as the output variable were generated. In the present embodiment, the first prediction error analysis model was generated using the gradient boosting (LightGBM) method.

In the present embodiment, the approximately 200 types of manufacturing conditions (variables) selected in STEP 1 were grouped by the four manufacturing processes. In other words, the variables of the steelmaking process (group A), the variables of the hot rolling process (group B), the variables of the cold rolling process (group C), and the variables of the annealing process (group D) were each used as input variables (explanatory variables) for the first prediction error analysis models (STEP 3). STEP 3 corresponds to the variable selection step.

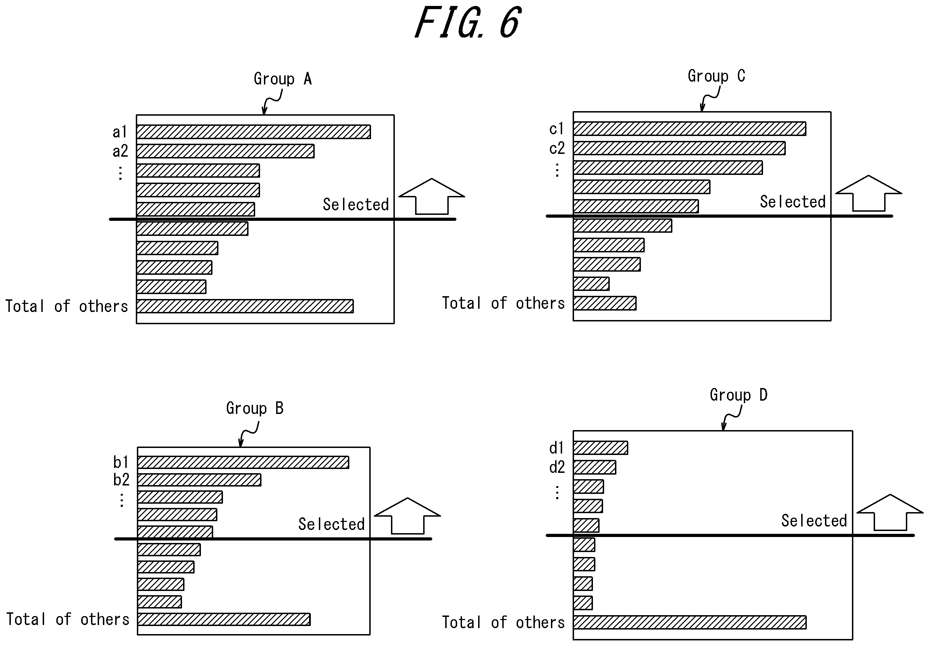

FIG. 6 is a diagram illustrating, for each group, a graph in which the variable importance of manufacturing conditions used as input variables is calculated using the first prediction error analysis model and arranged in descending order. In the present embodiment, the top five manufacturing conditions (variables) were selected for each of the four groups. In other words, out of approximately 200 manufacturing conditions selected in STEP 1, a total of 20 manufacturing conditions were selected across four groups to perform prediction error analysis. The horizontal axis of each graph in FIG. 6 represents the variable importance, and in the present example, the SHAP value was used as the variable importance. In other words, each bar graph illustrates the magnitude of the SHAP value for each manufacturing condition.

A prediction error analysis model (second prediction error analysis model) with the quality prediction error from STEP 2 as the output variable was generated using the gradient boosting method. At this time, the input variables (explanatory variables) were the 20 manufacturing conditions selected in STEP 3 (STEP 4). STEP 4 corresponds to the factor identification step.

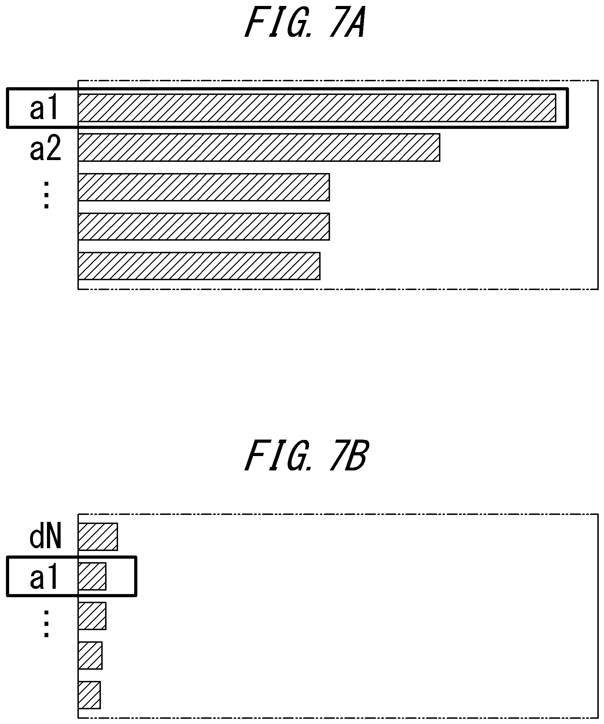

FIG. 7A is a diagram illustrating prediction error analysis in the present example. Using the second prediction error analysis model, the variable importance (SHAP value) of the 20 manufacturing conditions used as input variables was calculated, and the manufacturing conditions were ranked in descending order of variable importance. The manufacturing condition that caused the quality variation was identified as the manufacturing condition with the highest variable importance in FIG. 7A, i.e., "a1" in the steelmaking process (group A).

FIG. 7B is a diagram illustrating prediction error analysis in a comparative example. In the comparative example, a prediction error analysis model (see FIG. 8C) was generated using approximately 200 types of manufacturing conditions selected in STEP 1 as input variables and the quality prediction error in STEP 2 as the output variable, without performing STEP 3 (variable selection). In the comparative example, this prediction error analysis model was used to calculate the variable importance (SHAP value) of approximately 200 manufacturing conditions used as input variables, and the variable importance was arranged in descending order as illustrated in FIG. 7B. In the comparative example, the manufacturing condition with the highest variable importance was identified as "dN" in the annealing process (group D), resulting in an incorrect outcome. Furthermore, in the comparative example, the steelmaking process (group A) "a1", which was the true cause, was indicated in second place.

As described above, the quality variation factor identification method, a quality variation factor identification apparatus, a quality variation factor identification apparatus system, and a method of manufacturing a metal material according to the present embodiment can accurately identify factors of quality variation in a product manufactured through a plurality of manufacturing processes, based on the above configuration and processes.

**In** other words, according to the present disclosure, even if there are hundreds of variables (manufacturing conditions) that can affect quality, the manufacturing conditions of a plurality of manufacturing processes can be divided into a plurality of groups. By using a plurality of models (first prediction error analysis models) that represent the relationship between the manufacturing conditions of each group and the quality prediction error, it is possible to select manufacturing conditions (variables) that have a high contribution to the quality prediction error for each group. Furthermore, by using a model (second prediction error analysis model) that represents the relationship between all of the manufacturing conditions (variables) selected for each group and the quality prediction error, it is possible to identify a factor causing quality variation. According to the present disclosure, as described above, it is possible to avoid overfitting, eliminate the influence of manufacturing conditions (variables) having low relevance, and easily identify important factors that cause quality variation.

Furthermore, according to the present disclosure, grouping can be performed by identical manufacturing processes. With such grouping, the manufacturing conditions that have a high influence (contribution) on product quality in each manufacturing process can be identified clearly, and an improvement in quality control standards can be expected.

Furthermore, according to the present disclosure, manufacturing conditions can be grouped by physical phenomena (factors) that affect quality. With such grouping, the important manufacturing processes, equipment, and corresponding manufacturing conditions can be clarified for each physical phenomenon (factor), and an improvement in quality control standards can be expected.

Furthermore, according to the present disclosure, in a method of manufacturing a metal material that is produced through a plurality of manufacturing processes, manufacturing conditions that contribute to quality can be determined so as to remain within a control range. As a result, a good quality metal material can be manufactured.

While embodiments of the present disclosure have been described with reference to the drawings and examples, it should be noted that various modifications and amendments may easily be implemented by those skilled in the art based on the present disclosure. Therefore, it should be noted that such variations and modifications are included within the scope of the present disclosure. For example, functions or the like included in each component, each process, or the like can be rearranged without logical inconsistency, and a plurality of components, processes, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

Here, the quality variation factor identification apparatus (for example, computer) need not be a single apparatus but rather may consist of a plurality of apparatuses that are located in different locations and can exchange data via a network. In other words, a plurality of apparatuses connected via a network can function overall as the quality variation factor identification apparatus. For example, the quality variation factor identification apparatus may have a hardware configuration including one computer, or a plurality of computers connected via a network. In the case of configuration by a plurality of computers, the performance database 12 may be stored in a shared memory that can be accessed by each computer.

Furthermore, the configuration illustrated in FIG. 1 is just one example. For example, the data input unit 11 and the performance database 12 may be provided outside the quality variation factor identification apparatus as a performance data acquisition apparatus, and the performance database 12 may be configured to be accessible by the quality variation factor identification apparatus. The performance data acquisition apparatus acquires data including manufacturing conditions of the plurality of manufacturing processes and actual quality values. In this configuration, the performance database 12 may store actual operation data from, for example, a data input unit 11 provided in a host computer. The host computer could be, for example, a process computer that manages the manufacturing process of metal materials.

Furthermore, the first output unit 16 and the second output unit 19 may be provided outside the quality variation factor identification apparatus as information output apparatuses and may be configured to output, as an output signal, information regarding a specific manufacturing condition identified by the quality variation factor identification apparatus as a factor causing quality variation of a product. As described above, the first output unit 16 outputs, as an output signal, information including specific manufacturing conditions, and when the output destination of the output signal is a control apparatus of equipment, the output signal may be a control signal for automatically stopping the target equipment for which the specific manufacturing conditions are set. Furthermore, as described above, the second output unit 19 outputs a control range for the specific manufacturing condition as an output signal, and when the output destination is the control apparatus of the equipment, the output signal can be the control signal of the equipment. Here, the output signal for information related to specific manufacturing conditions refers to the output signal of at least one of the first output unit 16 and the second output unit 19. Furthermore, the output signal may include various types of information obtained through the processing of the quality variation factor identification method. The output signal may, for example, include manufacturing conditions that have a high contribution to the quality prediction error or may include information yielded by sorting the variable importance for each manufacturing condition using a graph or the like, such as the graph illustrated in FIG. 9B. At this time, the information included in the output signal may be displayed by a display device such as a liquid crystal display or an organic electro-luminescence panel. The display device may be a device that can be viewed by operators in the manufacturing process of metal materials. Furthermore, the display device may be the display of an operation terminal such as a smartphone or tablet used by the operator. The operator can confirm or make a final decision on changes to manufacturing conditions based on operator guidance information displayed on the display device (such as manufacturing conditions with a high contribution and sorted manufacturing conditions).

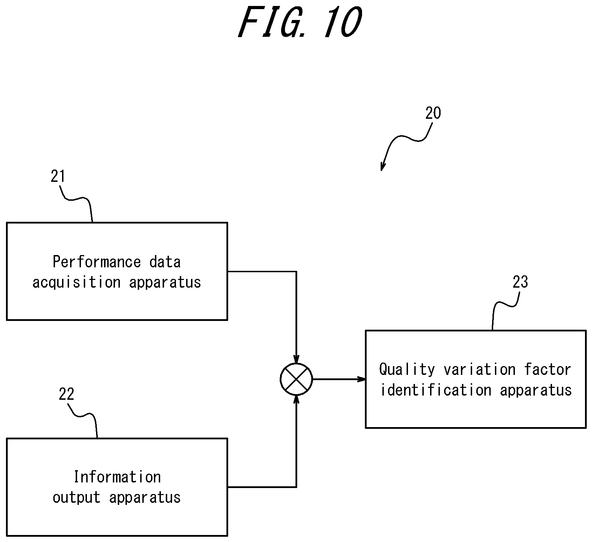

A quality variation factor identification apparatus system may, for example, be configured by a quality variation factor identification apparatus, a performance data acquisition apparatus, and an information output apparatus that includes an operation terminal. As illustrated in FIG. 10, a quality variation factor identification apparatus system 20 is configured so that a performance data acquisition apparatus 21, an information output apparatus 22, and a quality variation factor identification apparatus 23 can communicate with each other via a network. In the quality variation factor identification apparatus system 20, a data input unit 11 and an information output apparatus 22, which are included in the performance data acquisition apparatus 21, are located within the steelworks. A performance database 12 and the quality variation factor identification apparatus 23, which are included in the performance data acquisition apparatus 21, are implemented on a server in the cloud, for example. The quality variation factor identification apparatus system 20 may further be configured to include a host computer such as a process computer. The apparatuses that configure the quality variation factor identification apparatus system can communicate with each other via a network. The network is, for example, the Internet. Part of the network may be configured to include, for example, a local area network (LAN).

Furthermore, in the above embodiment, the quality prediction unit 13 is assumed to execute the processing of the quality prediction step and the quality prediction error calculation step. Here, the quality variation factor identification apparatus may be configured to include a quality prediction error calculation unit, separate from the quality prediction unit 13, that executes the processing of the quality prediction error calculation step. In this case, the quality prediction unit 13 may execute only the quality prediction step.

### REFERENCE SIGNS LIST

- 11: Data input unit
- 12: Performance database
- 13: Quality prediction unit
- 14: Variable selection unit
- 15: Factor identification unit
- 16: First output unit
- 17: Quality prediction model regeneration unit
- 18: Specific manufacturing condition control range determination unit
- 19: Second output unit
- 20: Quality variation factor identification apparatus system
- 21: Performance data acquisition apparatus
- 22: Information output apparatus
- 23: Quality variation factor identification apparatus

## Claims

1. A quality variation factor identification method for causing a computer to identify factors causing quality variation of a product manufactured through a plurality of manufacturing processes, the method comprising:
a quality prediction step of causing the computer to execute processing to input manufacturing conditions of the plurality of manufacturing processes into a quality prediction model that takes the manufacturing conditions as input variables and quality as an output variable, and to predict the quality as a predicted quality value;
a quality prediction error calculation step of causing the computer to execute processing to calculate a difference between an actual quality value of an actual product manufactured by the plurality of manufacturing processes and the predicted quality value as a quality prediction error;
a variable selection step of causing the computer to execute processing to group the manufacturing conditions of the plurality of manufacturing processes into a plurality of groups, calculate a first variable importance of the manufacturing conditions of each group using a plurality of first prediction error analysis models, each generated by taking the manufacturing conditions of a corresponding group as input variables and the quality prediction error as an output variable, and select manufacturing conditions having a high contribution to the quality prediction error from among the manufacturing conditions of each group, based on the first variable importance; and
a factor identification step of causing the computer to execute processing to calculate a second variable importance of the selected manufacturing conditions using a second prediction error analysis model generated by taking only the selected manufacturing conditions as input variables and the quality prediction error as an output variable, and to identify, based on the second variable importance, from among the selected manufacturing conditions, a manufacturing condition having a high contribution to the quality prediction error as a factor causing quality variation of the product.

2. The quality variation factor identification method according to claim 1, wherein in the variable selection step, the manufacturing conditions of the plurality of manufacturing processes are grouped by identical manufacturing processes.

3. The quality variation factor identification method according to claim 1, wherein in the variable selection step, the manufacturing conditions of the plurality of manufacturing processes are grouped by classifying physical phenomena that affect the quality and grouping the manufacturing conditions according to the physical phenomena affected by the manufacturing conditions.

4. A quality variation factor identification apparatus for identifying factors causing quality variation of a product manufactured through a plurality of manufacturing processes, the apparatus comprising:
a quality prediction unit configured to input manufacturing conditions of the plurality of manufacturing processes into a quality prediction model that takes the manufacturing conditions as input variables and quality as an output variable, predict the quality as a predicted quality value, and calculate a difference between an actual quality value of an actual product manufactured by the plurality of manufacturing processes and the predicted quality value as a quality prediction error;
a variable selection unit configured to group the manufacturing conditions of the plurality of manufacturing processes into a plurality of groups, calculate a first variable importance of the manufacturing conditions of each group using a plurality of first prediction error analysis models, each generated by taking the manufacturing conditions of a corresponding group as input variables and the quality prediction error as an output variable, and select manufacturing conditions having a high contribution to the quality prediction error from among the manufacturing conditions of each group, based on the first variable importance; and
a factor identification unit configured to calculate a second variable importance of the selected manufacturing conditions using a second prediction error analysis model generated taking the selected manufacturing conditions as input variables and the quality prediction error as an output variable, and to identify, based on the second variable importance, from among the selected manufacturing conditions, a manufacturing condition having a high contribution to the quality prediction error as a factor causing quality variation of the product.

5. The quality variation factor identification apparatus according to claim 4, further comprising a first output unit configured to output, as an output signal, information including a specific manufacturing condition identified by the factor identification unit as a factor causing quality variation.

6. The quality variation factor identification apparatus according to claim 4 or 5, further comprising
a quality prediction model regeneration unit configured to regenerate and update a quality prediction model by adding, to the input variables, a specific manufacturing condition identified by the factor identification unit as a factor causing quality variation; and
a specific manufacturing condition control range determination unit configured to determine a control range of the specific manufacturing condition using the updated quality prediction model.

7. The quality variation factor identification apparatus according to claim 6, further comprising a second output unit configured to output the control range of the specific manufacturing condition, determined by the specific manufacturing condition control range determination unit, as an output signal.

8. A quality variation factor identification apparatus system for identifying factors causing quality variation of a product manufactured through a plurality of manufacturing processes, the system comprising the quality variation factor identification apparatus according to claim 4 or 6, a performance data acquisition apparatus, and an information output apparatus, wherein
the performance data acquisition apparatus is configured to acquire data including manufacturing conditions of the plurality of manufacturing processes and actual quality values,
the quality variation factor identification apparatus is configured to use the data to identify information regarding a specific manufacturing condition that is a factor causing quality variation of a product, and
the information output apparatus is configured to output the information regarding the specific manufacturing condition as an output signal.

9. A method of manufacturing a metal material, the method comprising:
predicting quality of a product using a quality prediction model that includes, among input variables, a specific manufacturing condition identified by the quality variation factor identification method according to any one of claims 1 to 3 and takes the quality as an output variable;
determining manufacturing conditions identified as factors of product quality so that the predicted quality of the product falls within a preset range; and
manufacturing a steel product according to the determined manufacturing conditions.
